# EUROPÄISCHE PATENTANMELDUNG

(11) **EP 1 329 657 A2**
(43) Veröffentlichungstag der Anmeldung: **23.07.2003**
(21) Anmeldenummer: 03000940.1
(22) Anmeldetag: 16.01.2003
(51) Int. Cl.: F16K 15/06

(54) **Sperrventil**

(30) Priorität: 16.01.2002 DE 10201626
(71) Anmelder: DIETER WILDFANG GmbH, D-79379 Müllheim (DE)
(72) Erfinder: Zoller, Uwe, 79379 Müllheim (DE)
(74) Vertreter: Maucher, Wolfgang, Dipl.-Ing.

(57) **Zusammenfassung**

Die Erfindung betrifft ein Sperrventil (1) mit einem Ventilkörper (2), der in einer Schließstellung des Sperrventils (1) an einem Ventilsitz anliegt und von dort mittels eines das Sperrventil (1) durchströmenden Fluids gegen die Rückstellkraft eines federelastischen Rückstellelements (4) in eine Offenstellung bewegbar ist, wobei der Ventilkörper zuströmseitig eine Prallfläche (3) hat, die in einer etwa rechtwinklig zur Strömungsrichtung des Fluids angeordneten Ebene liegt. Für das erfindungsgemäße Sperrventil ist kennzeichnend, dass der Ventilkörper (2) sowohl zu- als auch abströmseitig einen zentralen Führungszapfen (13, 14) trägt, welche Führungszapfen (13, 14) jeweils in einer zugeordneten und vorzugsweise hülsenförmig ausgestalteten Führungsöffnung (15) des Sperrventil-Gehäuses (8) geführt sind, und dass am Ventilsitz oder an der Prallfläche (3) eine Anformung (12) vorgesehen ist, die eine umlaufend linienförmige Kontakt- und Dichtzone zwischen Prallfläche (3) und Ventilsitz bewirkt. Das erfindungsgemäße Sperrventil zeichnet sich durch seine hohe Funktionssicherheit und seine geräuscharme Betriebsweise aus (vgl. Fig. 2).

## Beschreibung

Die Erfindung betrifft ein Sperrventil mit einem Ventilkörper, der in einer Schließstellung des Sperrventils an einem Ventilsitz anliegt und von dort mittels eines das Sperrventil durchströmenden Fluids gegen die Rückstellkraft eines federelastischen Rückstellelements in eine Offenstellung bewegbar ist, wobei der Ventilkörper zuströmseitig eine Prallfläche hat, die in einer etwa rechtwinklig zur Strömungsrichtung orientierten Ebene angeordnet ist.

Solche Sperrventile werden beispielsweise in sanitären Wasserleitungen als hydrodynamischer Strömungsschalter verwendet, der bei einem einen Grenzwert übersteigenden Wasserdruck oder einem zu großen Durchfluß eine Nebenleitung öffnet, um die Funktionsfähigkeit des in der Hauptleitung befindlichen und beispielsweise zur Zündung eines Gas- oder Elektro-Durchlauferhitzers benötigten Impulsgebers nicht durch einen überhöhten Wasserdruck zu gefährden.

Um druckbedingte Beschädigungen an dem Impulsgeber mit Sicherheit zu vermeiden, ist eine störungsfreie Funktionsweise dieser Sperrventile erforderlich, die bei vorbekannten Ventilausführungen jedoch nicht immer gewährleistet war.

Aus der GB 1 490 553 kennt man bereits ein Sperrventil der eingangs erwähnten Art, das in eine Versorgungsleitung zwischengeschaltet ist. Das vorbekannte Sperrventil weist ein Ventilgehäuse auf, in dem ein Ventilschließkörper in einer randseitig offenen und etwa topfförmig ausgestalteten Ventilaufnahme verschieblich geführt und von einer Schließstellung gegen die Kraft einer Rückstellfeder in eine Offenstellung bewegbar ist. Der Ventilschließkörper hat zuströmseitig eine etwa rechtwinklig zur Strömungsrichtung orientierte Prallfläche, in die ein Dichtring eingelassen ist. In Schließstellung wird der Ventilschließkörper mit seinem Dichtring gegen das freie Stirnende eines im Gehäuseinneren vorgesehenen Rohrstutzens gedrückt. In der Ventilaufnahme ist ein By-Pass-Kanal vorgesehen, der von einer am abströmseitigen Ende der Ventilaufnahme vorgesehenen Durchtrittsöffnung zum offenen Umfangsrand der Ventilaufnahme führt und einen Unterdruck erzeugt, welcher zur Überwindung der Rückstellkraft der Rückstellfeder den auf die Prallfläche einwirkenden Druck der Fluidströmung unterstützt. Das vorbekannte Sperrventil erfordert einen vergleichsweise hohen Konstruktionsaufwand, um eine ordnungsgemäße Funktionsweise sicherzustellen. Die aufwendige Konstruktion des vorbekannten Sperrventils bringt darüber hinaus einen großen Gehäusedurchmesser des Ventilgehäuses mit sich, was die Einsatzmöglichkeiten dieses Sperrventils zusätzlich begrenzt.

Es besteht daher insbesondere die Aufgabe, ein geräuscharm arbeitendes Sperrventil der eingangs erwähnten Art zu schaffen, das sich durch eine hohe Funktionssicherheit auszeichnet.

Eine erfindungsgemäße Lösung dieser Aufgabe besteht bei dem Sperrventil der eingangs erwähnten Art insbesondere darin, dass der Ventilkörper sowohl zu- als auch abströmseitig einen zentralen Führungszapfen trägt, welche Führungszapfen jeweils in einer zugeordneten und vorzugsweise hülsenförmig ausgestalteten Führungsöffnung des Sperrventil-Gehäuses geführt sind, und dass am Ventilsitz oder an der Prallfläche eine Anformung vorgesehen ist, die eine umlaufend linienförmige Kontakt- und Dichtzone zwischen Prallfläche und Ventilsitz bewirkt.

Der Ventilkörper des erfindungsgemäßen Sperrventils weist zuströmseitig eine quer zur Strömungsrichtung des Fluids orientierte Prallfläche auf. Da die Prallfläche in einer etwa rechtwinklig zur Strömungsrichtung des Fluids angeordneten Ebene liegt, wird der Ventilkörper rasch und schon bei vergleichsweise geringen Drücken des Fluids vollständig in seine Offenstellung bewegt. Damit werden druckbedingte Zwischenstellungen des Ventilkörpers weitestgehend vermieden, die ansonsten beispielsweise zu einem Pendeln des Ventilkörpers und somit zu einer unerwünschten Geräuschentwicklung führen könnten. Ein solches Pendeln des Ventilkörpers wird bei dem erfindungsgemäßen Sperrventil vor allem aber dadurch vermieden, dass der Ventilkörper sowohl zu- als auch abströmseitig einen zentralen Führungszapfen trägt, wobei diese Führungszapfen jeweils in einer zugeordneten und vorzugsweise hülsenförmig ausgestalteten Führungsöffnung des Sperrventil-Gehäuses geführt sind. Da bei dem erfindungsgemäßen Sperrventil durch die beidseitige Führung des Ventilkörpers ein radiales Pendeln mit Sicherheit vermieden wird, wird auch den ansonsten in Zwischenstellungen eventuell drohenden Geräuschentwicklungen des Sperrventils wirkungsvoll entgegengewirkt. Der Ventilkörper wird durch den Druck des zuströmseitig auf der Prallfläche auftreffenden Fluids von der Schließstellung gegen die Rückstellkraft einer Rückstellfeder oder dergleichen Rückstellelements in die Offenstellung des Sperrventils bewegt, sobald der Druck des Fluids die dagegen gerichtete Rückstellkraft des Rückstellelements und somit einen definierten Grenzwert übersteigt. Demgegenüber wird in Schließstellung die am Ventilsitz oder an der Prallfläche vorgesehene Anformung wirksam, die eine umlaufend linienförmige Kontakt- und Dichtzone zwischen Prallfläche und Ventilsitz bewirkt. Durch diese am Ventilsitz oder an der Prallfläche vorgesehene Anformung wird eine große Flächenpressung zwischen Ventilsitz und Prallfläche und somit eine gute Abdichtung in diesem Bereich bewirkt, ohne dass noch zusätzlich ein materialverschiedener Dichtring erforderlich ist.

Nach einem weiteren Vorschlag von eigener schutzwürdiger Bedeutung ist vorgesehen, dass der vom Ventilkörper begrenzte Ringspalt eine entgegen der Schließrichtung des Ventilkörpers zunehmende düsenförmige Verengung aufweist. Bei diesem Erfindungsvorschlag weist der zwischen dem Ventilkörper und der Gehäuseinnenwand vorgesehene Ringspalt eine entgegen der Schließrichtung des Ventilkörpers und somit in Öffnungsrichtung zunehmende düsenförmige Verengung auf. Da somit das Fluid mit zunehmendem Druck den Ventilkörper zunehmend in die düsenförmige Verengung bewegt, und da das zuströmende Fluid dabei somit einen zunehmend geringeren Spaltquerschnitt zu überwinden hat, kann der Druckverlustanstieg zwischen der Zuström- und der Abströmseite des Sperrventils trotz der regelmäßig linear steigenden Federkennlinie der Rückstellfeder in Summe kleingehalten werden.

Dabei sieht eine bevorzugte Ausführungsform gemäß der Erfindung vor, dass die düsenförmige Verengung des Ringspalts so bemessen ist, dass der Druckverlust zwischen der Zuström- und der Abströmseite des Sperrventils bei erhöhtem Druck des zuströmenden Fluids in einem abgestimmten Betriebsbereich im wesentlichen konstant bleibt.

Um die Ventileigenschaften des erfindungsgemäßen Sperrventils variieren und bei Bedarf auch nachträglich noch verändern zu können, ist es vorteilhaft, wenn der Ringspalt an seinem Außenumfang durch einen Ringkörper begrenzt ist, dessen lichter Ringquerschnitt sich von der Zuström- zur Abströmseite hin vorzugsweise konisch verengt, und wenn dem Sperrventil verschiedene Ringkörper zugeordnet sind, die wahlweise in das Sperrventil-Gehäuse einsetzbar sind. Durch Austausch der Ringkörper kann somit das Verhältnis zwischen dem lichten Ringquerschnitt einerseits und der axialen Erstreckung der düsenförmigen Verengung andererseits verändert und an die gewünschten Ventileigenschaften des Sperrventils angepasst werden.

Zweckmäßig ist es, wenn die Prallfläche des Ventilkörpers außenrandseitig durch eine gerundete Strömungskante begrenzt ist. Durch diese Rundung der Strömungskante wird einer eventuell geräuschbildenden Strömungsablösung des Fluids von der Oberfläche des Ventilkörpers wirkungsvoll entgegengewirkt.

Eine bevorzugte und konstruktiv besonders einfache Ausführungsform gemäß der Erfindung sieht vor, dass der Ventilkörper etwa tellerförmig ausgestaltet ist, dessen in einer etwa radial zur Sperrventil-Längsachse angeordneter Tellerboden die Prallfläche bildet.

Ein modularer Aufbau des erfindungsgemäßen Sperrventils wird noch begünstigt, wenn das Sperrventil-Gehäuse zumindest zweiteilig ausgestaltet ist, und wenn das Sperrventil-Gehäuse ein zuströmseitiges Gehäuseteil und ein abströmseitiges Gehäuseteil hat, die insbesondere im Bereich ihrer Umfangswandung verrastbar, verschraubbar oder dergleichen miteinander verbindbar sind. Somit kann vor dem Zusammenfügen der beiden Gehäuseteile beispielsweise bei Bedarf ein bestimmter Ringkörper in das Gehäuseinnere eingesetzt werden, der nach dem Verbinden dieser Gehäuseteile im Gehäuseinneren sicher und unverlierbar gehalten ist. Auch ist es möglich, im Rahmen eines modular aufgebauten Baukastensystems Gehäuseteile bereitzustellen, die zusammengefügt Sperrventile mit verschiedenen Außenabmessungen ergeben und/oder die abströmseitige Gehäuseteile mit und ohne angeformtem Ringkörper haben.

Auf zusätzliche und zudem noch materialverschiedene Dichtringe kann verzichtet werden, wenn an die zuströmseitige und/oder an die abströmseitige Gehäuse-Stirnseite des Sperrventil-Gehäuses eine Dichtlippe einstückig angeformt ist, welche Dichtlippe(n) mit ihrem freien Lippenende über die Gehäusewandung des Sperrventil-Gehäuses schräg nach außen vorsteht(vorstehen). Insbesondere wenn das Sperrventil in Strömungsrichtung zu einem Anschlag in eine Rohrleitung eingesetzt wird, ist es vorteilhaft, wenn zumindest an die zuströmseitige Gehäuse-Stirnseite eine solche Dichtlippe einstückig angeformt ist.

Damit auch die in einem Fluid eventuell mitgeführten Schmutzpartikel nicht zu Funktionsstörungen des Sperrventils führen können, ist es vorteilhaft, wenn die Führungsöffnung(en) zumindest eine vom Führungszapfen freigehaltene und als Durchspülkanal für Schmutzpartikel ausgestaltete Nut oder Rille aufweist(aufweisen). Dabei ist es besonders vorteilhaft, wenn jede Führungsöffnung mehrere, in Umfangsrichtung der Führungsöffnung vorzugsweise gleichmäßig verteilte Durchspülkanäle hat.

Das erfindungsgemäße Sperrventil kann bei Bedarf gleichzeitig sowohl als Strömungsschalter als auch als Rückflussverhinderer eingesetzt werden. Dabei ist es vorteilhaft, wenn auf die Prallfläche eines als Rückflussverhinderer ausgestalteten Sperrventils eine Ringscheibe aus dichtendem Material aufgelegt ist, welche Ringscheibe in Schließstellung des Sperrventils dichtend zwischen dem Ventilkörper und dem Ventilsitz angeordnet ist. Diese Ringscheibe, die mit ihrer Ringöffnung beispielsweise auf den zuströmseitigen Führungszapfen aufgeschoben sein kann, kann aus elastischem und entsprechend dichtendem Material hergestellt werden.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: in einem Teil-Längsschnitt ein als Strömungsschalter dienendes Sperrventil in seiner Offenstellung,
- Fig. 2: das Sperrventil aus Fig.1 in seiner Schließstellung,
- Fig. 3: ein sowohl als Strömungsschalter als auch als Rückflussverhinderer dienendes Sperrventil in seiner Offenstellung und
- Fig.4: das Sperrventil aus Fig.3 in seiner Schließstellung.

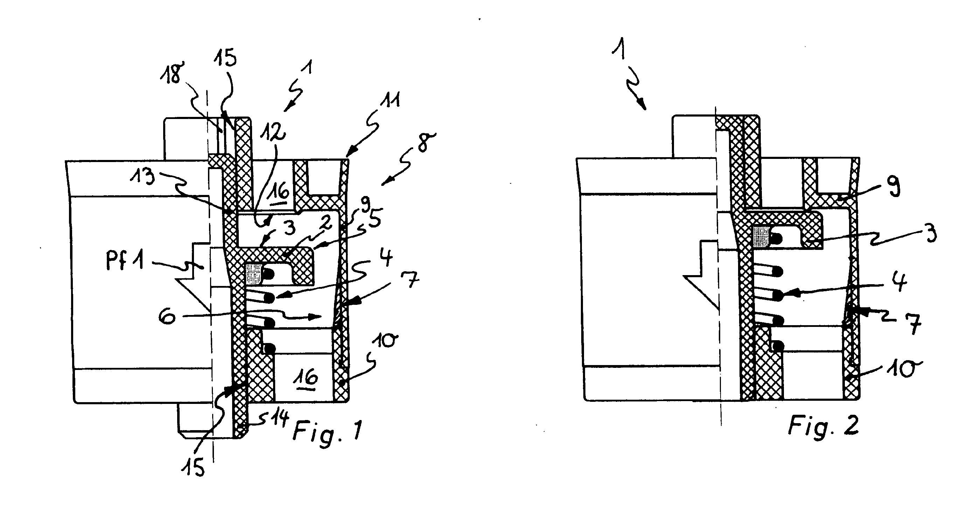

In den Figuren 1 und 2 ist ein Sperrventil 1 dargestellt, das in eine sanitäre Wasserleitung einsetzbar ist. Das Sperrventil 1 wird beispielsweise als hydrodynamischer Strömungsschalter verwendet, der bei einem einen Grenzwert übersteigenden Wasserdruck eine Nebenleitung öffnet, um die Funktionsfähigkeit des in der Hauptleitung befindlichen und beispielsweise zur Zündung eines Gas- oder Elektro-Durchlauferhitzers benötigten Impulsgebers nicht durch einen zu hohen Wasserdruck oder einen überhöhten Durchfluß zu gefährden.

Das Sperrventil 1 hat einen Ventilkörper 2, der etwa tellerförmig ausgestaltet ist. Der etwa radial zur Sperrventil-Längsachse angeordnete Tellerboden bildet eine zuströmseitige Prallfläche 3, die in einer etwa rechtwinklig zur Strömungsrichtung des Fluids angeordneten Ebene liegt. Der Ventilkörper 2 wird somit stets durch den Druck des zuströmseitig auf der Prallfläche 3 auftreffenden Fluids von der in Fig.2 gezeigten Schließstellung gegen die Kraft einer Rückstellfeder 4 in die in Fig.1 dargestellte Offenstellung bewegt. Die Prallfläche 3 wird außenrandseitig durch eine hier gerundete Strömungskante 5 begrenzt, so dass die an dieser Strömungskante 5 sich bildenden Turbulenzen des Fluids die Öffnungsbewegung des Ventilkörpers 2 noch zusätzlich unterstützen.

Die Öffnungsbewegung des Ventilkörpers 2 beginnt, sobald der auf die Prallfläche 3 auftreffende Druck des Wasserstroms die entgegenwirkende Rückstellkraft der Rückstellfeder 4 übersteigt. Da die Prallfläche 3 in einer etwa rechtwinklig zur Strömungsrichtung des Fluids angeordneten Ebene liegt, wird der Ventilkörper 2 rasch von der Schließ- in seine Offenstellung bewegt. Dabei werden druckabhängige Zwischenstellungen des Ventilkörpers 2 vermieden, die anderenfalls ein Pendeln des Ventilkörpers 2 und eine unerwünschte Geräuschentwicklung verursachen könnten. Wie aus den Figuren 1 und 2 deutlich wird, weist das dort dargestellte Sperrventil 1 im Bereich des zwischen Ventilkörper 2 und Gehäuseinnenwand vorgesehenen Ringspalts eine entgegen der Schließrichtung des Ventilkörpers 2 und somit in dessen Öffnungsrichtung Pf1 zunehmende düsenförmige Verengung 6 auf. Da somit das Fluid mit zunehmendem Druck den Ventilkörper 2 zunehmend in die düsenförmige Verengung 6 bewegt, und da das zuströmende Fluid dabei somit einen zunehmend geringeren Spaltquerschnitt zu überwinden hat, kann der Druckverlustanstieg zwischen der Zuström- und der Abströmseite des Sperrventils 1 kleingehalten werden. Dabei wird ein weitestgehend konstanter Druckverlust angestrebt. Gleichzeitig vermag die düsenförmige Verengung 6 die Öffnungsbewegung des Ventilkörpers 2 zu beschleunigen, wodurch eine Geräuschreduzierung noch zusätzlich begünstigt wird.

Die düsenförmige Verengung 6 wird durch einen Ringkörper 7 begrenzt, dessen lichter Ringquerschnitt sich von der Zuströmzur Abströmseite hin konisch verengt. Um bei Bedarf ein Sperrventil 1 mit den gewünschten Kennlinien zusammenstellen zu können, ist es vorteilhaft, wenn verschiedene Ringkörper 7 vorgesehen sind, die wahlweise in das Sperrventil-Gehäuse 8 eingesetzt werden können.

Das Sperrventil-Gehäuse 8 ist hier zweiteilig ausgestaltet und weist ein zuströmseitiges sowie ein abströmseitiges Gehäuseteil 9,10 auf, die im Bereich ihrer Umfangswandung miteinander verrastbar sind. Somit kann zunächst der Ventilkörper 2 und bei Bedarf gegebenenfalls auch der gewünschte Ringkörper 7 in das Gehäuseinnere des zuströmseitigen Gehäuseteils 9 eingelegt werden, um diese Bestandteile 2,7 des Sperrventils 1 anschließend durch Zusammenfügen der Gehäuseteile 9,10 im Gehäuseinneren zu sichern.

Die Sperrventil-Patrone wird bis zu einem Anschlag in die zuströmseitige Einsetzöffnung der Patronen-Aufnahme einer hier nicht weiter dargestellten Wasserleitung eingesetzt. Um den zwischen dem Sperrventil 1 und dem das Sperrventil-Gehäuse 8 umgreifenden Leitungsabschnitt eventuell verbleibenden Zwischenraum möglichst dicht zu verschließen, ist an der zuströmseitigen Gehäuse-Stirnseite des Sperrventil-Gehäuses 8 eine Dichtlippe 11 einstückig angeformt, die mit ihrem freien Lippenende über die Gehäusewandung des Sperrventil-Gehäuses 8 schräg nach außen vorsteht. Diese Dichtlippe 11 macht einen separaten und gegebenenfalls auch materialverschiedenen Dichtring zwischen dem Sperrventil-Gehäuse 8 und dem das Gehäuse 8 umgreifenden Leitungsabschnitt überflüssig.

Aus Fig. 1 wird deutlich, dass der Ventilsitz außenrandseitig durch eine im Querschnitt kegelförmige Anformung 12 begrenzt ist, die eine umlaufend linienförmige Kontakt- und Dichtzone zwischen der Prallfläche 3 und dem Ventilsitz bewirkt.

Der Ventilkörper 3 des hier dargestellten Sperrventils 1 weist sowohl zu- als auch abströmseitig einen zentralen Führungszapfen 13,14 auf. Diese Führungszapfen 13,14 sind jeweils in einer zugeordneten hülsenförmigen Führungsöffnung 15 des Sperrventil-Gehäuses 8 geführt. Da der Ventilkörper 2 somit sowohl zuströmseitig als auch abströmseitig über die Führungszapfen 13, 14 geführt ist, wird einem Pendeln des Ventilkörpers und einer damit eventuell verbundenen Geräuschentwicklung auch insoweit entgegengewirkt. Dabei sind die die Führungsöffnungen 15 begrenzenden Führungshülsen mit der Gehäusewandung des Sperrventil-Gehäuses 8 über radiale Verbindungsstege 16 verbunden.

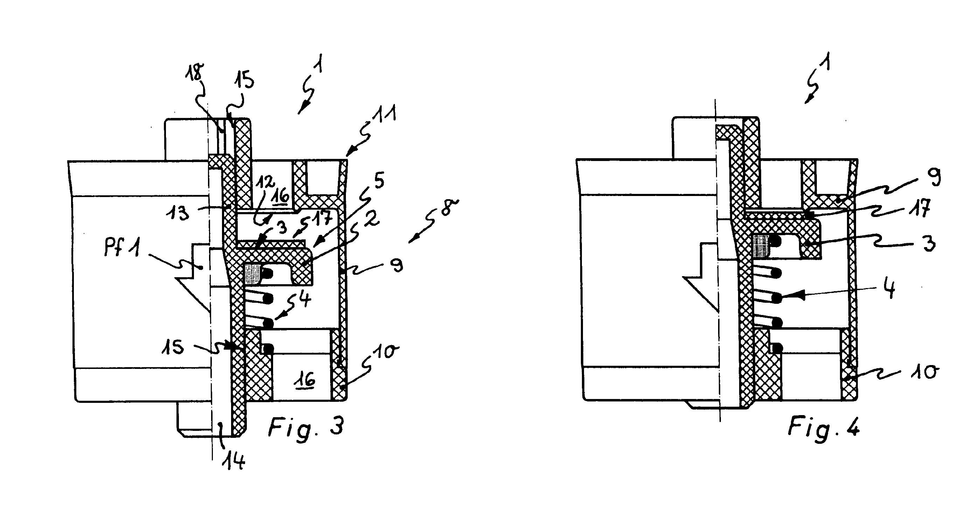

In den Figuren 1 und 3 ist erkennbar, dass die zu- und abströmseitigen Führungsöffnungen 15 mehrere, über den Umfang verteilte und vom benachbarten Führungszapfen 13, 14 freigehaltene Nuten oder Rillen 18 aufweisen, die als Durchspülkanal für Schmutzpartikel dienen.

In den Figuren 3 und 4 ist angedeutet, dass das Sperrventil 1 gleichzeitig auch als Rückflussverhinderer verwendbar ist. Dabei ist auch die Prallfläche 3 des als Rückflussverhinderer ausgestalteten und in den Figuren 3 und 4 dargestellten Sperrventils 1 eine Ringscheibe 17 aus elastischem und entsprechend dichtendem Material aufgelegt. Diese Ringscheibe 17 ist in Schließstellung des Sperrventils 1 dichtend zwischen dem Ventilkörper 2 und dem Ventilsitz angeordnet.

## Patentansprüche

1. Sperrventil (1) mit einem Ventilkörper (2), der in einer Schließstellung des Sperrventils (1) an einem Ventilsitz anliegt und von dort mittels eines das Sperrventil (1) durchströmenden Fluids gegen die Rückstellkraft eines federelastischen Rückstellelements (4) in eine Offenstellung bewegbar ist, wobei der Ventilkörper (2) zuströmseitig eine Prallfläche (3) hat, die in einer etwa rechtwinklig zur Strömungsrichtung orientierten Ebene angeordnet ist, **dadurch gekennzeichnet, dass** der Ventilkörper (2) sowohl zu- als auch abströmseitig einen zentralen Führungszapfen (13, 14) trägt, welche Führungszapfen (13, 14) jeweils in einer zugeordneten und vorzugsweise hülsenförmig ausgestalteten Führungsöffnung (15) des Sperrventil-Gehäuses (8) geführt sind, und dass am Ventilsitz oder an der Prallfläche (3) eine Anformung (12) vorgesehen ist, die eine umlaufend linienförmige Kontakt- und Dichtzone zwischen Prallfläche (3) und Ventilsitz bewirkt.

2. Sperrventil nach Anspruch 1, **dadurch gekennzeichnet, dass** die am Ventilsitz oder an der Prallfläche (3) vorgesehene und eine umlaufend linienförmige Kontakt- und Dichtzone bewirkende Anformung (12) im Querschnitt kegelförmig ausgebildet ist.

3. Sperrventil nach dem Oberbegriff von Anspruch 1, insbesondere nach Anspruch 1 oder 2, **dadurch gekennzeichnet, dass** der vom Ventilkörper begrenzte Ringspalt eine entgegen der Schließrichtung des Ventilkörpers zunehmende düsenförmige Verengung aufweist.

4. Sperrventil nach einem der Ansprüche 1 bis 3, **dadurch gekennzeichnet, dass** die düsenförmige Verengung (6) des Ringspalts so bemessen ist, dass der Druckverlust zwischen der Zuström- und der Abströmseite des Sperrventils (1) bei erhöhtem Druck des zuströmenden Fluids im wesentlichen konstant bleibt.

5. Sperrventil nach einem der Ansprüche 1 bis 4, **dadurch gekennzeichnet, dass** der Ringspalt an seinem Außenumfang durch einen Ringkörper (7) begrenzt ist, dessen lichter Ringquerschnitt sich von der Zuström- zur Abströmseite hin vorzugsweise konisch verengt, und dass dem Sperrventil (1) verschiedene Ringkörper (7) zugeordnet sind, die wahlweise in das Sperrventil-Gehäuse (8) einsetzbar sind.

6. Sperrventil nach einem der Ansprüche 1 bis 5, **dadurch gekennzeichnet, dass** die Prallfläche (3) des Ventilkörpers (2) außenrandseitig durch eine gerundete Abrisskante (5) begrenzt ist.

7. Sperrventil nach einem der Ansprüche 1 bis 6, **dadurch gekennzeichnet, dass** der Ventilkörper (2) etwa tellerförmig ausgestaltet ist, dessen in einer etwa radial zur Sperrventil-Längsachse angeordneter Tellerboden die Prallfläche (3) bildet.

8. Sperrventil nach einem der Ansprüche 1 bis 7, **dadurch gekennzeichnet, dass** das Sperrventil-Gehäuse (8) zumindest zweiteilig ausgestaltet ist und dass das Sperrventil-Gehäuse ein zuströmseitiges Gehäuseteil (9) und ein abströmseitiges Gehäuseteil (10) hat, die insbesondere im Bereich ihrer Umfangswandung verrastbar, verschraubbar oder dergleichen miteinander verbindbar sind.

9. Sperrventil nach einem der Ansprüche 1 bis 8, **dadurch gekennzeichnet, dass** an die zuströmseitige und/oder an die abströmseitige Gehäuse-Stirnseite des Sperrventil-Gehäuses (8) eine Dichtlippe (11) einstückig angeformt ist, welche Dichtlippe(n) (11) mit ihrem freien Lippenende über die Gehäusewandung des Sperrventil-Gehäuses (8) schräg nach außen vorsteht.

10. Sperrventil nach einem der Ansprüche 1 bis 9, **dadurch gekennzeichnet, dass** die Führungsöffnung(en) (15) zumindest eine vom Führungszapfen (13,14) freigehaltene und als Durchspülkanal für Schmutzpartikel ausgestaltete Nut oder Rille (18) aufweist(en).

11. Sperrventil nach einem der Ansprüche 1 bis 10, **dadurch gekennzeichnet, dass** auf die Prallfläche (3) eines als Rückflussverhinderer ausgestalteten Sperrventils (1) eine Ringscheibe (17) aus dichtendem Material aufgelegt ist, welche Ringscheibe (17) in Schließstellung des Sperrventils (1) dichtend zwischen dem Ventilkörper (2) und dem Ventilsitz angeordnet ist.
